(19) Europäisches Patentamt / European Patent Office / Office européen des brevets

(11) **EP 4 075 626 A1**

(12) **EUROPEAN PATENT APPLICATION**

(43) Date of publication:
**19.10.2022 Bulletin 2022/42**

(21) Application number: **21168205.9**

(22) Date of filing: **13.04.2021**

(51) International Patent Classification (IPC):
**H02J 3/24** (2006.01)     **H02H 9/08** (2006.01)

(52) Cooperative Patent Classification (CPC):
**H02J 3/24; H02H 9/08**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hitachi Energy Switzerland AG
5400 Baden (CH)**

(72) Inventor: **BONMANN, Dietrich
53340 Meckenheim (DE)**

(74) Representative: **Vossius & Partner
Patentanwälte Rechtsanwälte mbB
Siebertstraße 3
81675 München (DE)**

(54) **CURRENT DAMPER FOR VOLTAGE TRANSFORMER**

(57)     The present disclosure relates to a current damper for a voltage transformer, comprising a first section comprising at least one pair of diodes arranged in an anti-parallel configuration; a second section arranged parallel to the first section, and comprising at least one capacitor; and the first section and the second section being configured to be coupled between a neutral connection of the voltage transformer and a ground potential.

The present disclosure also relates to a system for current damping comprising a plurality of current dampers. The present disclosure also relates to a medium voltage or high voltage transformer comprising a current damper, a medium voltage or high voltage switchgear comprising a current damper, and/or a medium voltage or high voltage switchgear comprising a medium voltage or high voltage transformer.

Fig. 1

EP 4 075 626 A1

## Description

The present disclosure relates to a current damper, in particular for a voltage transformer. The present disclosure relates in particular to a direct current (DC) current damper. The present disclosure also relates to a medium voltage or high voltage transformer comprising a current damper, a medium voltage or high voltage switchgear comprising a current damper and a medium voltage or high voltage switchgear comprising a medium voltage or high voltage transformer.

Transformers, reactors and other electrical devices used in electrical distribution and transmission networks typically have a neutral connection to ground and are affected by small and medium DC current. The sources of such currents are diverse. The DC current will run through the neutral of a transformer via the windings over headline or cable back through the windings and neutral to ground. Small DC currents in alternating current (AC) grids are increasing due to power electronics application high voltage DC (HVDC) lines, etc., and that are often in the range of a few 100 mA up to a few A. The core of distribution and power transformers, reactors, etc., are made of high permeable electrical steel in order to keep the losses to a low level. Such low loss transformers are however very sensitive to such small DC currents as the core will become pre-magnetized by the DC current. This can cause a higher induction in one half wave of the AC voltage induced in the core, also referred to as half cycle saturation. In addition to losses, this will also cause a much higher noise emitted by transformers and reactors.

Compensating devices need sensors and controlled extra coils inside the transformer which makes them complex and expensive.

Known mitigation measures include:

- Increasing the core cross section or the introduction of air gaps in the core, which introduces cost and noise.

- DC compensation, which requires sensors in the transformers and active control, and can therefore only be used in new transformers and adds considerable cost to the transformer.

- DC reduction by insertion of resistors between transformer neutral and ground, which increases the voltage at the neutral during external faults, which puts close limits to the DC reduction effect.

- DC blocking by means of capacitors, which increases the neutral voltage even further in case of external faults. Both the transformer neutral and the blocking capacitor have to be protected from high voltages by means of very fast acting grounding switches and surge arresters. This method requires active controls.

In view of the above, it is an object of the present disclosure to reduce the detrimental effect of (moderate) AC currents passing through the neutral connection of a voltage transformer.

This object is achieved by the independent claims.

The present disclosure relates to a current damper for a voltage transformer. The current damper comprises a first section comprising at least one pair of diodes arranged in an anti-parallel configuration and a second section arranged parallel to the first section, and comprising at least one capacitor. The first section and the second section are configured to be coupled between a neutral connection of the voltage transformer and a ground potential.

It is clear for the skilled person that a current damper according to the present disclosure is not only suitable for a voltage transformer but also for other components, e.g. switchgear.

Throughout the present disclosure the word "coupled" encompasses situations where two entities are directly connected or where they are not directly connected, such as if the two entities have other components in between.

Various embodiments may implement the following features:
In an exemplary embodiment, the current damper is a DC current damper. The current damper may be configured to block DC current up to any one of: 2A, 3A, 5A, 7A, 10A, 20 A.

A capacitance of the at least one capacitor may be dimensioned that a voltage drop of an AC current from the neutral connection at the at least one capacitor is lower than a forward threshold voltage of the diodes of the at least one pair of diodes.

The AC current from the neutral connection may be below 100 A, in particular below 50 A, more particularly below 25 A.

The transformer may be a medium or high voltage transformer.

The first section may comprise a plurality of pairs of diodes. The diodes of each pair of diodes may be arranged in an anti-parallel configuration.

The at least one pair of diodes may have a forward threshold voltage of 0.5-1.2V, in particular of 0.8V.

The second section may comprise a plurality of capacitors. The plurality of capacitors may be arranged in parallel.

The present disclosure also relates to a system for current damping comprising a plurality of any one of the current dampers described afore. The plurality of current dampers is configured to be coupled in series between a neutral connection of the voltage transformer and a ground potential.

The present disclosure also relates to a medium voltage or high voltage transformer comprising any one of the current dampers described afore and or a system described afore.

The present disclosure also relates to a medium voltage or high voltage switchgear comprising any one of the current dampers described afore and or a system described afore.

The present disclosure also relates to a medium voltage or high voltage switchgear comprising a medium voltage or high voltage transformer described afore.

With the present disclosure, the ability of a DC damper having diodes in antiparallel configuration to mitigate the effects of small and medium DC currents in the presence of a moderate AC current passing through the neutral can be considerably enhanced.

As reflected by the teaching of the present disclosure, this is achieved by splitting the electrical paths for AC and DC currents passing through a transformer neutral. The DC part can only flow through the diode pairs of the damper for DC driving voltages above a certain threshold, e.g. of a few 10 Volts. The AC part is flowing through one or more capacitors with a low AC impedance coupled in parallel to the diodes. In this way, the one or more capacitors act as a bypass for AC currents.

The DC mitigating effect of the diodes can be fully maintained when the capacitance is chosen high enough to keep the peak voltage drop at the capacitor due to the AC current lower than the forward voltage of the diodes.

Among others, when the AC current through the capacitor increases the voltage drop at the capacitor will eventually exceed the forward voltage of the diodes, such that larger AC currents are predominantly flowing through the diodes. The capacitor and the transformer neutral are automatically protected from overvoltages, without the need for any active or controlled switching device.

In this manner, the present disclosure enhances the function of a (DC) current damper by enabling it to achieve its full capability even in the presence of significant AC without affecting the grounding of the transformer.

The voltage across the capacitor may be limited by the diodes to quite moderate voltages, which allows a very economical solution.

The above and other aspects and their implementations are described in greater detail in the drawings, the descriptions, and the claims.

Fig. 1 shows a current damper coupled between a neutral connection of a voltage transformer and a ground potential according to an embodiment of the present disclosure.

Fig. 2 shows a current damper coupled between a neutral connection of a voltage transformer and a ground potential according to an embodiment of the present disclosure.

Fig. 3 shows a current damper coupled between a neutral connection of a voltage transformer and a ground potential according to an embodiment of the present disclosure.

Fig. 4 shows a current damper coupled between a neutral connection of a voltage transformer and a ground potential according to an embodiment of the present disclosure.

Fig. 5-8 show systems for current damping comprising a plurality of current dampers coupled between a neutral connection of a voltage transformer and a ground potential 310 according to an embodiment of the present disclosure.

Fig. 9a and b illustrate the influence of the ratio of DC and AC current in the neutral connection of the voltage transformer on the time averaged voltage drop of the diodes of a current damper according to an embodiment of the present disclosure.

Fig. 10 illustrates a current/time diagram of a system according to an embodiment of the present disclosure.

Fig. 11 illustrates a DC blocking effect being affected by an AC neutral current according to an embodiment of the present disclosure.

Fig. 12 illustrates the necessary and the available driving voltage in the DC loop as a function of DC current according to an embodiment of the present disclosure.

In the following, exemplary embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

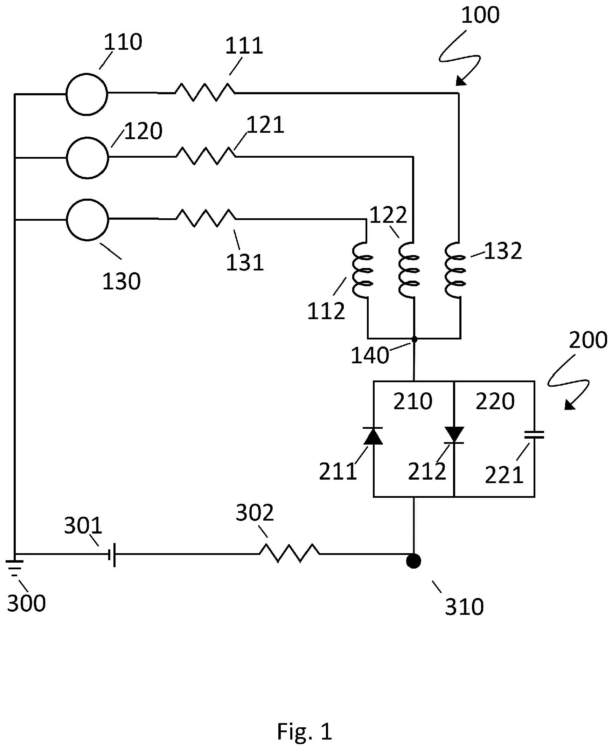

Fig. 1 shows a current damper 200 coupled between a neutral connection 140 (of a transformer line side 100) of a voltage transformer and a ground potential 310 according to an embodiment of the present disclosure. Fig. 1 shows ground potentials / ground potential connections 300 and 310 and the DC current source 301 represents the source of the DC current occurring in the whole loop shown in Fig. 1. The resistance 302 represents the ground resistance. In Fig. 1, only one transformer line side 100 of the voltage transformer is shown but is understood by the skilled person that the voltage transformer also comprises a second transformer line side. The transformer line side 100 is exemplarily shown as a three-phase system but is understood by the skilled person that other systems, e.g. having two phases, are covered by the embodiments of the present disclosure. The transformer line side 100 comprises three lines each having a voltage source 110, 120, and 130 and a coil 112, 122, and 132. The line resistance is indicated with reference numerals 111, 121, and 131. The current damper 200 comprises a first section 210 and a second section 220. The first section 210 comprises a pair of diodes 211 and 212 which are arranged in an anti-parallel configuration. In other words, the two diodes 211 and 212 in the first section are coupled in parallel but with opposing forward directions. Such a configuration is also called inverse-parallel in the art. The second section 220 comprises a capacitor 221. The first section 210 and the second section 220 are arranged in parallel. Thus, the pair of diodes 211 and 212 is arranged in parallel to the capacitor 221. With such a configuration the electrical paths for AC currents and DC currents passing through the transformer neutral 140 are split and the DC part can only flow through the first section 210, i.e. the pair of diodes 211 and 212 for DC driving voltages above a certain threshold, e.g. a few 10 volts. The AC part is flowing through the capacitor 221. According to an embodiment, the capacitor 221 has a low impedance. The capacitor 221 acts as a bypass for AC currents.

According to an embodiment, the DC mitigating effect of the first section 210, i.e. of the diodes 211 and 212 is fully maintained when the capacitance of the capacitor 221 is chosen high enough to keep the peak voltage drop at the capacitor 221 due to the AC current lower than the forward voltage of the diodes 211 and 212. In other words, according to an embodiment, the capacitance of the capacitor 221 is dimensioned that a voltage drop of an AC current from the neutral connection at the at least one capacitor is lower than a forward threshold voltage of the diodes 211 and 212.

The present disclosure has, among others, the advantageous effect that when the AC current through the capacitor 221 increases the voltage drop at the capacitor 221 will eventually exceed the forward (threshold) voltage of the diodes 211 and 212, such that larger AC currents are predominantly flowing through the diodes 211 and 212. The capacitor 221 and the transformer neutral 140 are automatically protected from overvoltages, without the need for any active or controlled switching device.

In this manner, the present disclosure enhances the function of the current damper 200 by enabling it to achieve its full capability even in the presence of significant AC without affecting the grounding of the transformer. The voltage across the capacitor 221 is limited by the diodes 211 and 212 to quite moderate voltages, which allows a very economical solution.

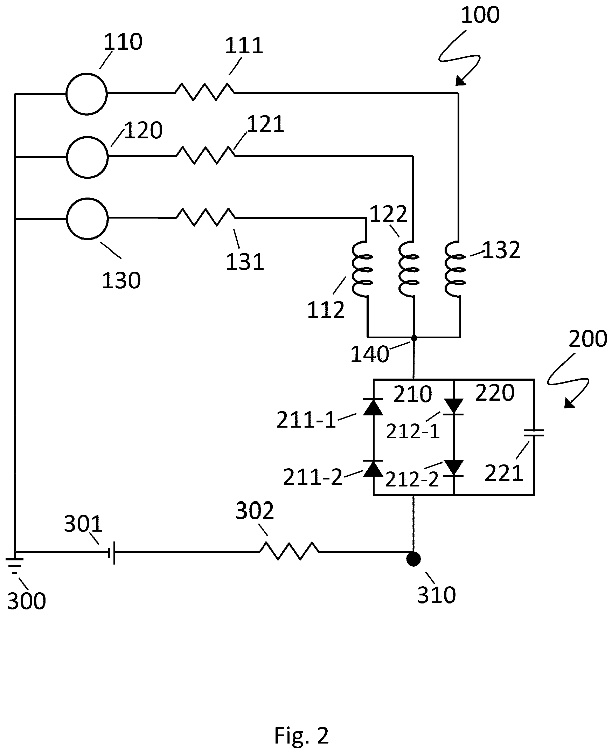

Fig. 2 shows a current damper 200 coupled between a neutral connection 140 (of a transformer line side 100) of a voltage transformer and a ground potential 310 according to another embodiment of the present disclosure. In contrast to the embodiment shown in Fig. 1, the first section of the current damper comprises two pairs of diodes, a first pair comprising diodes 211-1 and 212-1 and a second pair comprising diodes 211-2 and 212-2. The diodes 211-1 and 212-1 of the first pair are in antiparallel configuration (to each other) and the diodes 211-2 and 212-2 of the second pair are in antiparallel configuration (to each other). Fig. 2 shows only two pairs of diodes but is understood by the skilled person that x pairs of diodes with x being an integer are covered by the present disclosure, e.g. x = 2, 3, 5, 10, 20, 30 and so on. In such a configuration, the pairs of diodes are coupled in series, i.e. the diodes 211-1 and 211-2 of the respective pair having the same forward direction are coupled in series and the diodes 212-1 and 212-2 of the respective pair having the same opposing forward direction are coupled in series. In other words, the diodes of each pair of diodes are arranged in an anti-parallel configuration to each other. In such a configuration, the voltage drop in the first section 210 can be easily dimensioned.

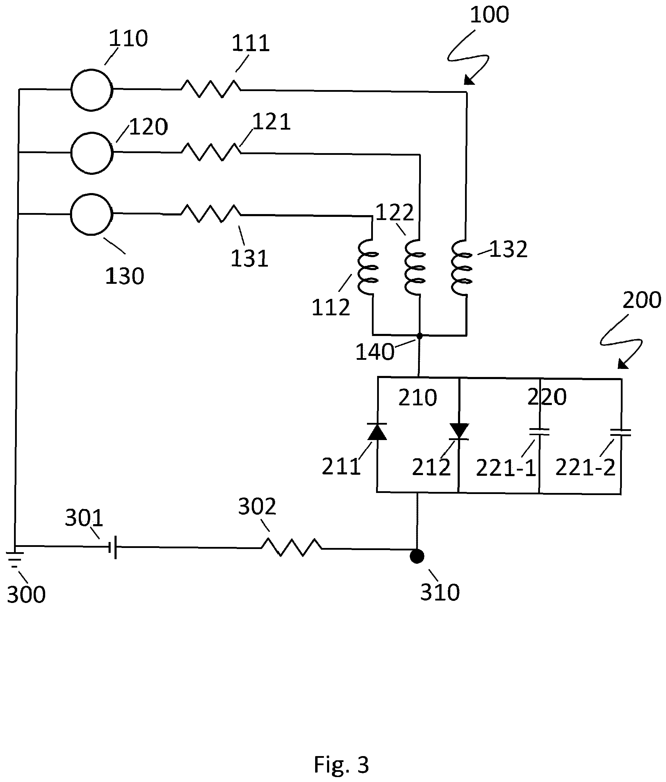

Fig. 3 shows a current damper 200 coupled between a neutral connection 140 (of a transformer line side 100) of a voltage transformer and a ground potential 310 according to another embodiment of the present disclosure. In contrast to the embodiments shown in Fig. 1 and 2, the second section comprises two capacitors 221-1 and 221-2 coupled in series. It is understood by the skilled person that the number of capacitors in parallel is not limited to two but any number $y$ of capacitors with $y$ being an integer is encompassed by the present disclosure, e.g. $y = 2, 3, 5, 10, 20, 30$ and so on. In such a configuration, the voltage drop of an AC current from the neutral connection at the capacitors can be easily dimensioned.

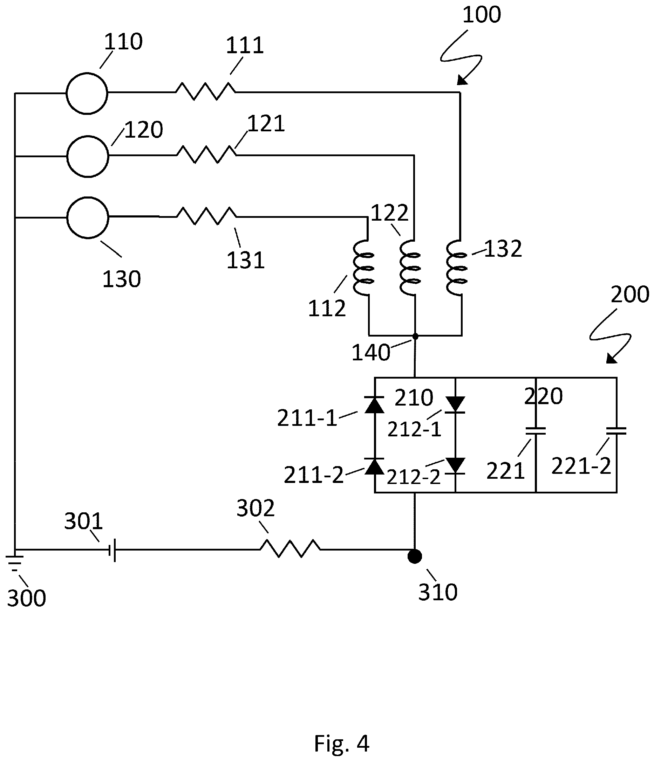

Fig. 4 shows a current damper 200 coupled between a neutral connection 140 (of a transformer line side 100) of a voltage transformer and a ground potential 310 according to another embodiment of the present disclosure. The current damper 200 shown in Fig. 4 is similar to that shown in Fig. 3. However, the current damper 200 comprises two or more pairs of diodes 211-1, 212-1 and 211-2, 212-2 as shown in Fig. 2. Also in this configuration, it is understood by the skilled person that the number of pairs of diodes is not limited to 2 (as for the embodiment shown in Fig. 2).

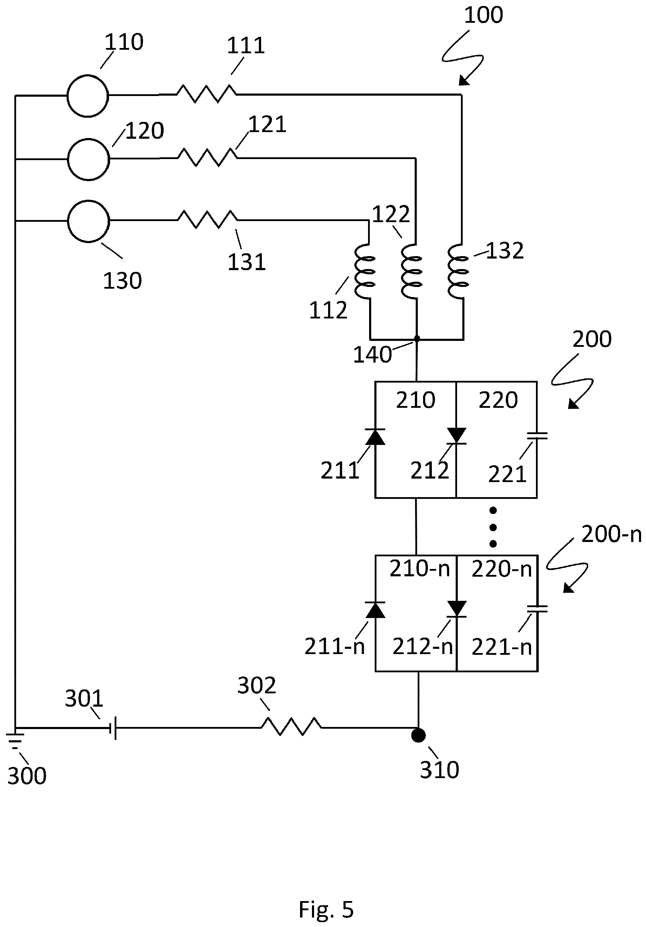

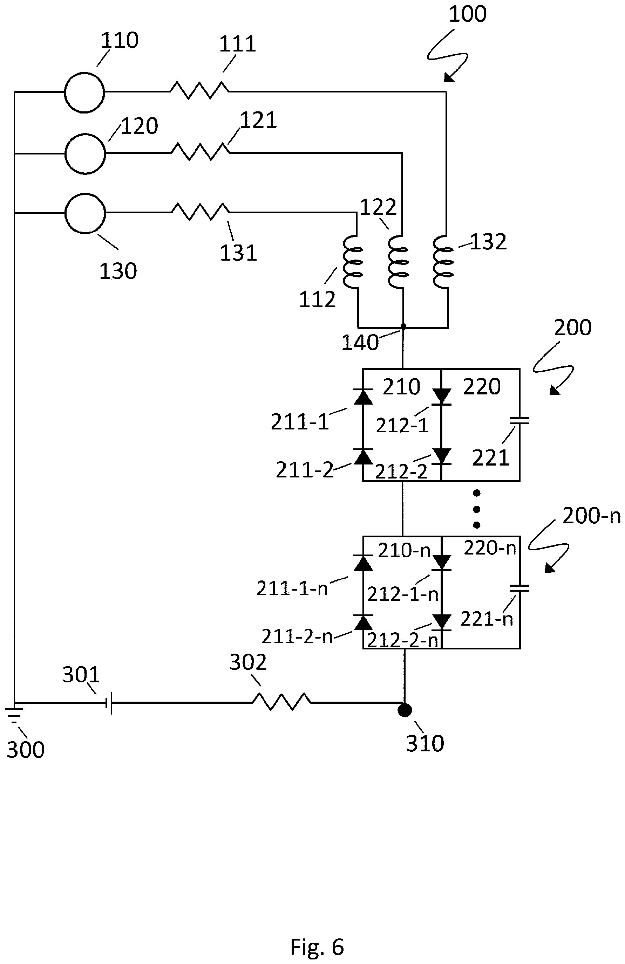

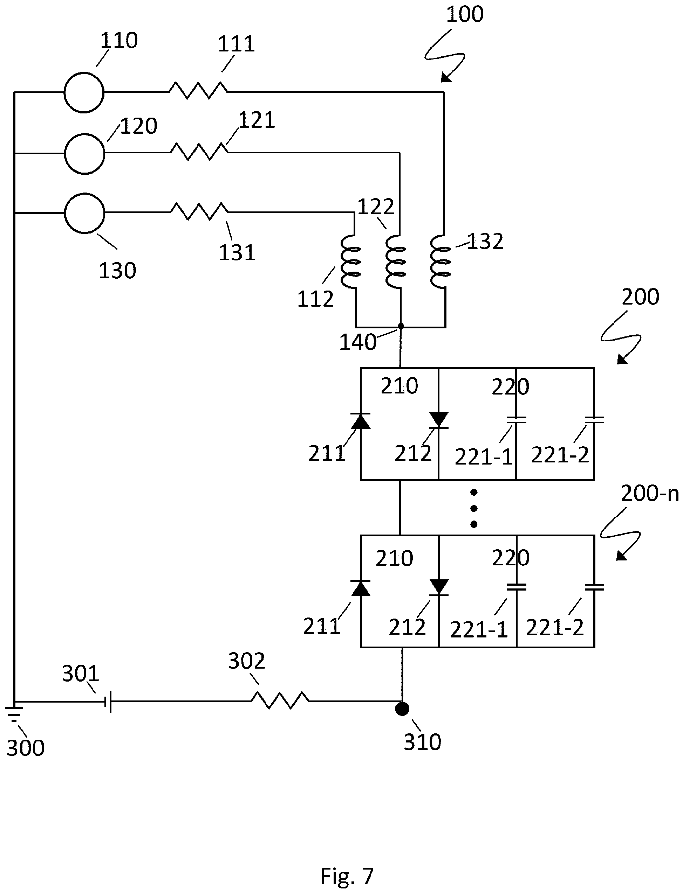

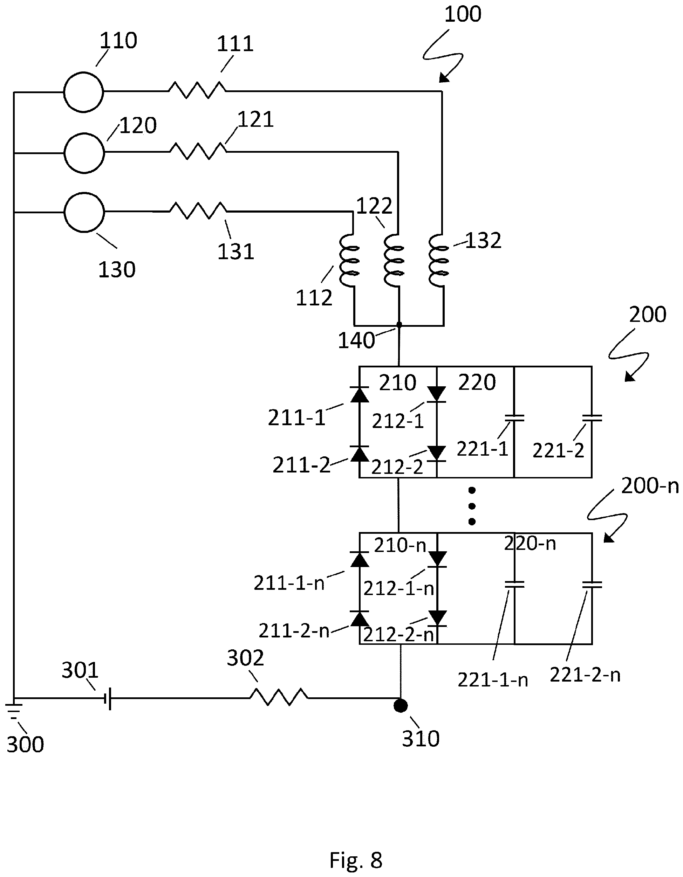

Fig. 5 shows a system for current damping comprising a plurality of current dampers 200 to 200-n, with n being an integer, coupled between a neutral connection 140 (of a transformer line side 100) of a voltage transformer and a ground potential 310 according to an embodiment of the present disclosure. Each current damper 200 to 200-n in the embodiment shown in Fig. 5 corresponds to the current damper 200 shown in the embodiment according to Fig. 1 but is understood by the skilled person that the present disclosure is not limited to it. For example, the current dampers 200 to 200-n can correspond to the current damper 200 shown in the embodiment according to Fig. 2 (see Fig. 6), to the current damper 200 shown in the embodiment according to Fig. 3 (see Fig. 7), or to the current damper 200 shown in the embodiment according to Fig. 4 (see Fig. 8). In addition, it is also understood by the skilled person that the present disclosure is not limited to each current damper 200 to 200-n being of the same type. For example, according to an embodiment, one or more current dampers of the plurality of current dampers 200 to 200-n are of the type as shown in Fig. 1 and one or more current dampers of the plurality of current dampers 200 to 200-n are of the type as shown in Fig. 3. According to another embodiment, one or more current dampers of the plurality of current dampers 200 to 200-n are of the type as shown in Fig. 3 and one or more current dampers of the plurality of current dampers 200 to 200-n are of the type as shown in Fig. 4.

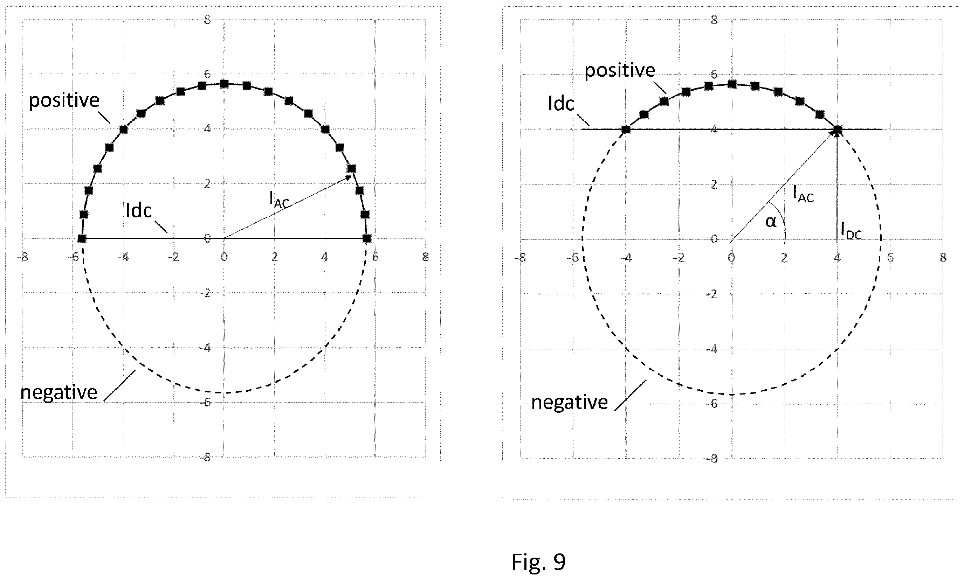

Fig. 9a and b illustrate the influence of the ratio of DC and AC current in the neutral connection of the voltage transformer on the time averaged voltage drop of the diodes of a current damper according to an embodiment of the present disclosure.

In general, the loading of the (three) phases of the transformer side 100 is quite symmetrical. Regular grid codes allow max 5% of asymmetry, but typical values are lower. For perfectly balanced loads there are still harmonic currents in the order of 1 A from the magnetization of the (three) phases that do not completely cancel. The driving voltage for the AC components is much higher than the forward voltage drop of the diodes of a current damper according to an embodiment of the present disclosure. Therefore, an AC component in the neutral current will drive the diodes into their conducting state. Without a DC current and with a sinusoidal AC, the fractions of the cycle with positive voltage drop and with negative voltage drop are equal, and the time averaged DC voltage drop will be zero, see Fig. 9a.

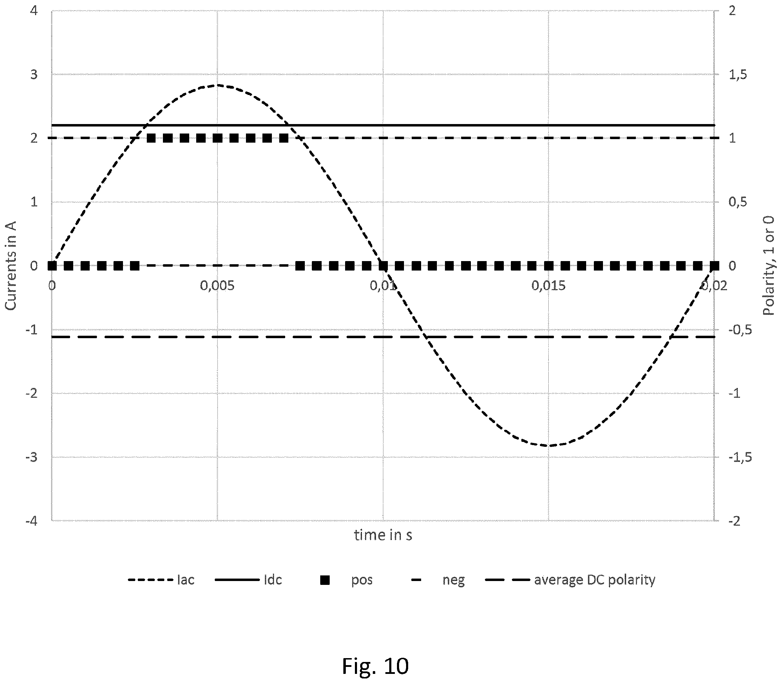

When there is a DC offset, the time averaged voltage drop across the diodes will be non-zero, acting against the driving DC voltage. Fig. 9b and Fig. 10 illustrate a situation having a small AC relative to the DC and one polarity will prevail. If the AC amplitude is smaller than the DC there will be no zero transitions and the entire forward voltage drop of the diodes is effective.

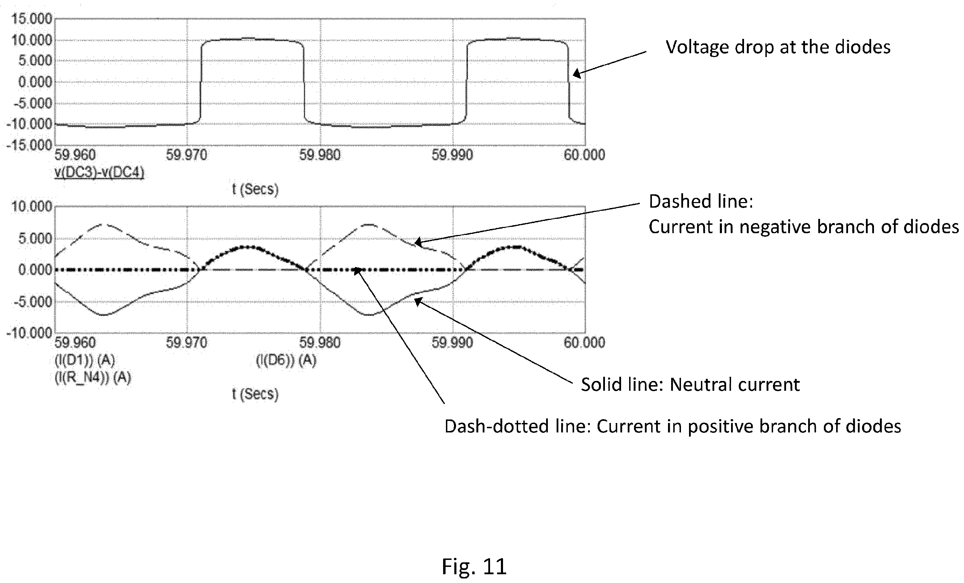

Fig. 11 illustrates how the DC blocking effect is affected by an AC neutral current according to an embodiment of the present disclosure. In the scenario shown in Fig. 11 a DC driving voltage (exemplarily shown as 301 in the Fig. before) of 6 V would drive 2.67 A DC across the DC loop resistance 2.23 Ohms for transformer windings, ground resistance and transmission lines if there was no DC damper. A neutral current which comprises DC current and superposed AC current of 4 A rms originating from a small single phase load and the magnetizing harmonics in the voltage transformer (solid curve in the lower part of Fig. 11) is flowing. Whenever the current changes polarity the conducting branch in the diodes changes and the polarity of the voltage drop at the diodes changes from -10 V to + 10 V or vice versa. After some seconds the time averaged voltage drop is approximately -0.2 x 10 V. Therefore, in this example the diodes subtract only 2 V instead of 10 V from the driving DC voltage. This means that 6 V - 2 V = 4 V remained to drive a DC current of 1.79 A across the DC resistance of 2.23 Ohms. So rather than completely blocking the prospective DC current of 2.67 A the diode pairs would only accomplish a reduction to 1.79 A DC, although the 10 V forward voltage drop was larger than the 6 V driving voltage.

According to an embodiment, the DC circuit in the situation shown in Figures 1 to 8 can be described as follows:

$$U_{DC} + R_{DC\_loop} I_{DC} + U_{diode} = 0 \quad \text{Equation 1}$$

with

$U_{DC}$ = Voltage driving the DC current
$R_{DC\_loop}$ = DC resistance of entire DC loop
$U_{diode}$ = time averaged voltage drop at the diodes
$I_{DC}$ = DC component in the neutral current in A

From Fig. 9b one can derive

$$\alpha = asin\left(\frac{I_{DC}}{I_{AC}}\right) \quad \text{Equation 1}$$

Where $I_{AC}$ = amplitude of AC component in the neutral current, $\alpha$ to be given in degrees.

For a fraction of the cycle of 180° + 2 * $\alpha$ the polarity of the voltage drop is negative. For a fraction of the cycle of 180° - 2 * $\alpha$ the polarity of the voltage drop is positive.

Averaged over one cycle the voltage drop at the diode stack is:

$$U_{diode} = U_{FW} * \frac{180° - 2\alpha - (180° + 2\alpha)}{360°} = \frac{4*asin\left(I_{DC}/I_{AC}\right)}{360°} \quad \text{Equation 2}$$

For $I_{DC} > I_{AC}$ $U_{diode}$ = $U_{FW}$

Where $U_{FW}$ = forward voltage drop of one diode times number of diodes in series in positive or negative branch (i.e. the branches having different forward direction of the first section).

$$U_{DC} - U_{FW} \frac{4*asin\left(I_{DC}/I_{AC}\right)}{360°} = I_{DC} * R_{DC\_loop} \quad \text{Equation 4}$$

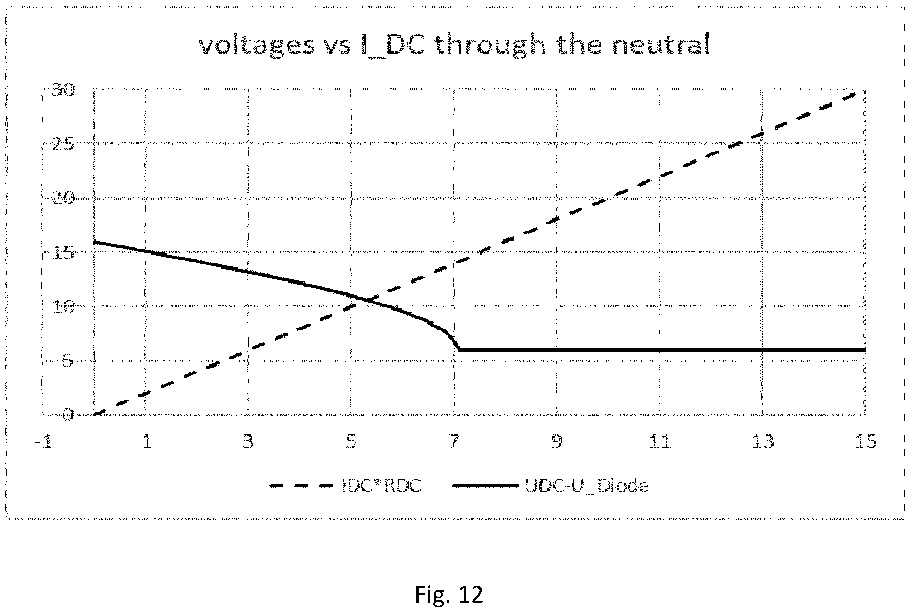

Equation 4 can be solved iteratively or graphically, as shown in Fig. 12. Fig. 12 illustrates the necessary DC driving voltage to pass the DC current through the DC loop resistance (right side of equation 4) and the actually remaining DC driving voltage after subtraction of the time averaged forward voltage drop at the diodes (left side of equation 4) as a function of the DC current through the neutral connection of the transformer. The example in Fig. 12 is for a DC driving voltage of 16 V, a diode stack forward voltage drop of 10 V and a DC loop resistance of 2 Ohms. The AC peak current through the neutral is 5 A. For a DC current of 5.35 A the driving voltage minus the time averaged forward voltage drop at the diodes is balanced by the resistive voltage drop.

Typically, a current damper shall reduce the DC current to a value « 1 A. As can be seen in Fig, 11 this may not be possible with a given diode forward voltage in the presence of an AC current. According to the present disclosure, the performance of a current damper according to the present disclosure can be enhanced by adding a capacitive bypass for AC currents in parallel to the diodes stack. The peak AC voltage drop at the capacitor should be lower than the diodes' forward voltage:

$$C_{bypass} > \frac{I_{AC}}{\omega * U_{FW}} \quad \text{Equation 5}$$

Typically, this may result in capacitances of several mF for service voltages of less than 100 V.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1.  A current damper for a voltage transformer, comprising:

    a first section comprising at least one pair of diodes arranged in an anti-parallel configuration;
    a second section arranged parallel to the first section, and comprising at least one capacitor; and
    the first section and the second section being configured to be coupled between a neutral connection of the voltage transformer and a ground potential.

2.  The current damper according to claim 1, wherein a capacitance of the at least one capacitor is dimensioned that a voltage drop of an AC current from the neutral connection at the at least one capacitor is lower than a forward threshold voltage of the diodes of the at least one pair of diodes.

3.  The current damper according to claim 1, wherein the AC current from the neutral connection is below 100 A, in particular below 50 A, more particularly below 25 A.

4.  The current damper according to any one of claims 1 to 3, wherein the transformer is a medium or high voltage transformer.

5.  The current damper according to any one of claims 1 to 4, wherein the first section comprises a plurality of pairs of diodes.

6.  The current damper according to claim 5, wherein the diodes of each pair of diodes are arranged in an anti-parallel configuration.

7.  The current damper according to any one of claims 1 to 6, wherein the current damper is a DC current damper and wherein the DC current damper is particularly configured to block DC current up to any one of: 2A, 3A, 5A, 7A, 10A, 20 A.

8.  The current damper according to any one of claims 1 to 7, wherein the at least one pair of diodes has a forward threshold voltage of 0.5-1.2V, in particular of 0.8V.

9.  The current damper according to any one of claims 1 to 8, wherein the second section comprises a plurality of capacitors, wherein the plurality of capacitors is particularly arranged in parallel.

10. A system for current damping comprising a plurality of current dampers according to any one of claims 1 to 9, wherein the plurality of current dampers is configured to be coupled in series between a neutral connection of the voltage transformer and a ground potential.

11. A medium voltage or high voltage transformer comprising a current damper according to any one of claims 1-9 and or a system according to claim 10.

12. A medium voltage or high voltage switchgear comprising a current damper according to any of any one of claims 1-9 and or a system according to claim 10.

13. A medium voltage or high voltage switchgear comprising a medium voltage or high voltage transformer according to claim 11.

Fig. 1

Fig. 2

Fig. 3

Fig. 4

Fig. 5

Fig. 6

Fig. 7

Fig. 8

Fig. 9

Fig. 10

EP 4 075 626 A1

Voltage drop at the diodes

Dashed line:
Current in negative branch of diodes

Solid line: Neutral current

Dash-dotted line: Current in positive branch of diodes

Fig. 11

Fig. 12

Europäisches
Patentamt
European
Patent Office
Office européen
des brevets

## EUROPEAN SEARCH REPORT

Application Number

EP 21 16 8205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/086058 A1 (ZAK FRANTISEK [CZ]; ZAKOVA JAROSLAVA [CZ]) 9 May 2019 (2019-05-09) | 1-9 | INV. H02J3/24 H02H9/08 |
| Y | * page 5, line 15 - line 25; figure 7 * * page 8, line 21 - line 28 * ----- | 10-13 | |
| Y | EP 3 739 712 A1 (ABB POWER GRIDS SWITZERLAND AG [CH]) 18 November 2020 (2020-11-18) * paragraphs [0001], [0019] - [0021], [0050]; figure 2 * ----- | 10-13 | |

TECHNICAL FIELDS
SEARCHED     (IPC)

H02J
H02H
H01F

The present search report has been drawn up for all claims

| Place of search | Date of completion of the search | Examiner |
|---|---|---|
| Munich | 21 September 2021 | Braccini, Roberto |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 16 8205

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2021

| Patent document cited in search report | | Publication date | Patent family member(s) | | Publication date |
|---|---|---|---|---|---|
| WO 2019086058 | A1 | 09-05-2019 | CZ | 307590 B6 | 27-12-2018 |
| | | | WO | 2019086058 A1 | 09-05-2019 |
| EP 3739712 | A1 | 18-11-2020 | EP | 3739712 A1 | 18-11-2020 |
| | | | WO | 2020234044 A1 | 26-11-2020 |

EPO FORM P0459

For more details about this annex : see Official Journal of the European Patent Office, No. 12/82